# DEMANDE DE BREVET EUROPEEN

(11) **EP 4 489 328 A1**
(43) Date de publication de la demande: **08.01.2025**
(21) Numéro de dépôt: 24180508.4
(22) Date de dépôt: 06.06.2024
(51) Int. Cl.: H04B 10/07, H04B 10/272

(54) **PROCEDE ET DISPOSITIF DE GESTION D'UN DEFAUT DE FONCTIONNEMENT D'UNE DIODE LASER**

(30) Priorité: 09.06.2023 FR 2305825
(71) Demandeur: SAGEMCOM BROADBAND SAS, 92270 Bois-Colombes (FR)
(72) Inventeur: REUCHE, Anthony, 92270 BOIS-COLOMBES (FR); JAULIN, Jean-Philippe, 92270 BOIS-COLOMBES (FR)
(74) Mandataire: Cabinet Le Guen Maillet

(57) **Abrégé**

L'invention concerne un procédé et un dispositif de gestion d'un défaut de fonctionnement d'une diode laser d'une interface optique d'un équipement utilisateur de type ONU, l'équipement utilisateur étant relié par un réseau optique d'accès de type réseau optique passif PON à un équipement de terminaison de ligne de type OLT, l'équipement utilisateur étant autorisé à émettre un signal optique pendant un intervalle de temps alloué à l'équipement utilisateur selon un principe d'accès multiple par répartition temporelle. Selon l'invention :
- on vérifie (E552) si la diode laser émet un signal optique en dehors de l'intervalle de temps alloué et, dans l'affirmative,
- on détecte (E553) une faute,
- on commande (E557) la désactivation de la diode laser,
- on exécute (E559) une ou plusieurs procédures de tentative de correction de la faute.

## Description

### DOMAINE TECHNIQUE

La présente invention concerne un procédé de gestion d'un défaut de fonctionnement d'une diode laser un réseau optique d'accès (« optical access network » en anglais) de type réseau optique passif PON (« Passive Optical Network » en anglais), plus particulièrement entre un équipement de terminaison de ligne optique OLT (« Optical Line Terminaison » en anglais) et un équipement utilisateur appelé « unité de réseau optique » ONU (« Optical Network Unit » en anglais).

### ETAT DE LA TECHNIQUE ANTERIEURE

La distribution de données numériques par réseau optique d'accès jusque chez une pluralité d'utilisateurs, pour accéder par exemple à l'Internet, est réalisée au travers d'un support fibre optique. On parle de technologie FTTH (pour « Fiber To The Home » en anglais) ou de FTTB (« Fiber To The Building » en anglais). Ainsi, plusieurs systèmes de transport de données peuvent coexister sur une même fibre optique, permettant ainsi à un opérateur de service de distribuer plusieurs services au travers d'une infrastructure réduite. Des réseaux optiques passifs PON peuvent ainsi être créés entre un ou plusieurs équipements de terminaison de ligne optique OLT et de nombreux équipements utilisateur ONU, grâce à des dispositifs de couplage de longueurs d'ondes et des dispositifs de couplage de lignes optiques d'utilisateurs. Les différents systèmes de transport correspondent à des matériels et protocoles normalisés, par exemple le système G-PON (« Gigabit Passive Optical Network » en anglais) qui permet d'atteindre un débit de 2.5 Gbps dans le sens descendant et un débit de 1.2 Gbps dans le sens montant, tel que décrit par la norme ITU-T G.984, ou le système XG-PON (« eXtended Gigabit Passive Optical Network » en anglais) qui permet d'atteindre un débit de 10 Gbps dans le sens descendant et un débit de 2.5Gbps dans le sens montant, tel que décrit par la norme ITU-T G.988, ou encore le système XGS-PON (« 10 Gigabit-capable Symmetric Passive Optical Network » en anglais) qui permet d'atteindre un débit de 10 Gbps aussi bien dans le sens montant que descendant, tel que décrit par la norme ITU-T G.9807.1.

Les différents systèmes de transport coexistant sur une même fibre optique établissent des communications par signaux lumineux utilisant des longueurs d'ondes porteuses (λ) distinctes ou des peignes de longueurs d'ondes porteuses, que ce soit dans le sens montant ou dans le sens descendant.

Afin d'assurer le transport des données à une pluralité d'ONU connectés sur une fibre unique et dont la longueur d'onde d'émission est identique, le principe de l'accès multiple par répartition temporelle (en anglais, TDMA, Time-Division Multiple Access) est mis en oeuvre. Il s'agit d'une technique de contrôle d'accès au support permettant de transmettre plusieurs flux de trafic sur un seul canal. Il utilise une division temporelle de la bande passante, dont le principe est de répartir le temps disponible entre les différents utilisateurs. Par ce moyen, une longueur d'onde peut être allouée, à tour de rôle (quasi simultanément), à plusieurs abonnés. L'entrelacement se fait sur un ensemble de bits émis dans des intervalles de temps prédéfinis (en anglais, TS, Time Slot). Ce multiplexage permet également de faire passer des flux synchrones ou asynchrones sur une liaison synchrone. Les paquets n'arrivant pas nécessairement dans l'ordre d'émission selon les chemins empruntés, le rôle du démultiplexeur est alors de les réordonner et de séparer les flux des différents canaux de manière à restituer l'information telle qu'elle était avant son transport sur le réseau multiplexé.

Dans le cas normal d'utilisation, l'ONU accède au réseau PON et émet son signal de transmission durant un intervalle de temps prédéfini et dédié.

Cette fenêtre temporelle d'émission est définie par l'OLT pour chacun des ONU et transmise à chacun d'eux par la voie descendante au travers des messages GTC (G-PON Traffic Control) émis au début de chaque trame descendante. Les ONU sont alors dans l'obligation de respecter la fenêtre qui leur a été allouée pour transmettre leur prochaine trame montante.

Néanmoins il est possible, dans des conditions dites de défaut, que l'ONU émette son signal de transmission soit de manière continue soit en dehors de son intervalle de temps alloué. Ce cas est connu sous le nom de « rogue ONU ».

Par conséquent, ces autres ONU se trouvent dans l'incapacité de fonctionner normalement car ils ne peuvent être compris par l'OLT. D'un point de vue utilisateur, l'impact peut aller d'une simple perturbation de service à une interruption totale de l'ensemble des services Internet (Data, IPTV, voix, ...).

Afin d'assurer une qualité de service au niveau réseau, il est nécessaire de détecter un défaut de type rogue ONU et de couper le signal de transmission lié. Actuellement, il existe des méthodes de détection et de management de Rogue ONU mais celles-ci sont initiées par l'OLT. En effet, ce dernier intègre un mécanisme de détection de rogue ONU interrompant temporairement le service de tous les ONU connectés en cas de détection de rogue. Certes, l'OLT envoie une instruction à l'ONU en défaut pour qu'il coupe son signal de transmission et, ainsi, rétablir le service pour les autres ONU du port, mais cela provoque néanmoins une perturbation de service. L'inconvénient de ce mécanisme actuel est qu'en cas de redémarrage de l'ONU en défaut, une nouvelle perturbation à lieu.

Il est alors souhaitable de pallier ces inconvénients de l'état de la technique.

Il est notamment souhaitable de fournir une solution qui permette de réduire les perturbations de service pour les ONU reliés à une fibre optique à laquelle est connecté un ONU qui émet son signal de transmission durant un intervalle de temps qui ne lui est pas dédié, voire de corriger le fonctionnement de l'ONU pour que celui-ci émette son signal de transmission uniquement durant un intervalle de temps qui lui est dédié.

### EXPOSE

Il est proposé un procédé de gestion d'un défaut de fonctionnement d'une diode laser d'une interface optique d'un équipement utilisateur de type ONU, l'équipement utilisateur étant relié par un réseau optique d'accès de type réseau optique passif PON à un équipement de terminaison de ligne de type OLT, l'équipement utilisateur étant autorisé à émettre un signal optique pendant un intervalle de temps alloué à l'équipement utilisateur selon un principe d'accès multiple par répartition temporelle, caractérisé en ce que le procédé comporte les étapes suivantes, exécutées par l'équipement utilisateur, de :
- vérification si la diode laser émet un signal optique en dehors de l'intervalle de temps alloué et, dans l'affirmative,
- détection d'une faute,
- commande de la désactivation de la diode laser,
- exécution d'une ou de plusieurs procédures de tentative de correction de la faute. Un ou plusieurs modes de réalisation concernent aussi un dispositif de gestion d'un défaut de fonctionnement d'une diode laser d'une interface optique d'un équipement utilisateur de type ONU, l'équipement utilisateur étant relié par un réseau optique d'accès de type réseau optique passif PON à un équipement de terminaison de ligne de type OLT, l'équipement utilisateur étant autorisé à émettre un signal optique pendant un intervalle de temps alloué à l'équipement utilisateur selon un principe d'accès multiple par répartition temporelle, caractérisé en ce que le dispositif est compris dans l'équipement utilisateur et comporte :
- des moyens de vérification si la diode laser émet un signal optique en dehors de l'intervalle de temps alloué et, dans l'affirmative,
- des moyens de détection d'une faute,
- des moyens de commande de la désactivation de la diode laser,
- des moyens d'exécution d'une ou de plusieurs procédures de tentative de correction de la faute.

Ainsi, selon un ou plusieurs modes de réalisation, il est permis de réduire les perturbations de service pour les ONU reliés à une fibre optique à laquelle est connecté un ONU qui émet son signal de transmission durant un intervalle de temps qui ne lui est pas dédié. La passerelle implémentant un ou plusieurs modes de réalisation peut ainsi tenter de corriger le fonctionnement de l'ONU pour que celui-ci émette son signal de transmission uniquement durant un intervalle de temps qui lui est dédié.

Selon un mode de réalisation particulier, la vérification si la diode laser émet un signal optique en dehors de l'intervalle de temps alloué est effectuée en comparant un signal délivré par une photodiode comprise dans l'interface optique et une commande d'activation de la diode laser émettant des signaux optiques à destination de l'équipement de terminaison de ligne, la photodiode étant positionnée de telle manière qu'elle soit illuminée par le signal émis par diode laser émettant des signaux optiques à destination de l'équipement de terminaison de ligne.

Selon un mode de réalisation particulier, une première procédure de tentative de correction de la faute consiste en une réinitialisation d'une mémoire volatile utilisée par un pilote de l'interface optique, une seconde procédure de tentative de correction de la faute consiste en une commande de chargement du logiciel utilisé par le pilote à partir de la mémoire non volatile, et une troisième procédure de tentative de correction de la faute consiste en un redémarrage de l'équipement utilisateur.

Selon un mode de réalisation particulier, la seconde procédure de tentative de correction de la faute est exécutée si la première procédure de tentative de correction de la faute a échoué et la troisième procédure de tentative de correction de la faute est exécutée si la seconde procédure de tentative de correction de la faute a échoué. Selon un mode de réalisation particulier, le procédé comporte en outre une étape de transfert d'un message à l'équipement de terminaison de ligne si la faute est détectée. Selon un mode de réalisation particulier, l'exécution d'une ou de plusieurs procédures de tentative de correction de la faute est conditionnée à la réception d'un message émis par l'équipement de terminaison de ligne.

Selon un mode de réalisation particulier, le message est transmis au travers d'un canal de communication logique de contrôle de trafic.

Selon un mode de réalisation particulier, le message est une notification de demande de mise en attente d'une procédure de bannissement de l'équipement utilisateur par l'équipement de terminaison de ligne.

Il est également proposé un programme d'ordinateur, qui peut être stocké sur un support et/ou téléchargé d'un réseau de communication, afin d'être lu par un processeur. Ce programme d'ordinateur comprend des instructions pour implémenter le procédé réalisé par une passerelle internet, tel que mentionné ci-dessus, lorsque ledit programme est exécuté par le processeur. Un ou des modes de réalisation concernent également un support de stockage d'informations stockant un tel programme d'ordinateur.

### BREVE DESCRIPTION DES DESSINS

Les caractéristiques mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement un agencement de réseau optique d'accès, dans lequel un mode de réalisation particulier non limitatif peut être implémentée ;
[Fig. 2] illustre schématiquement un mode de réalisation d' équipement utilisateur du réseau optique d'accès ;
[Fig. 3] illustre schématiquement un exemple d'agencement matériel d'un contrôleur de l'équipement utilisateur du mode de réalisation de la Fig. 2 ;
[Fig. 4] illustre schématiquement une partie d'une interface optique de l'équipement utilisateur du mode de réalisation de la Fig. 2 ;
[Fig. 5a] illustre schématiquement un premier exemple d'algorithme exécuté par l'équipement utilisateur ;
[Fig. 5b] illustre schématiquement un second exemple d'algorithme exécuté par l'équipement utilisateur ;
[Fig. 6a] illustre schématiquement un premier exemple d'un algorithme de tentative de correction du fonctionnement de l'ONU pour que celui-ci émette son signal de transmission uniquement durant un intervalle de temps qui lui est dédié ;
[Fig. 6b] illustre schématiquement un second exemple d'un algorithme de tentative de correction du fonctionnement de l'ONU pour que celui-ci émette son signal de transmission uniquement durant un intervalle de temps qui lui est dédié ;
[Fig. 6c] illustre schématiquement un troisième exemple d'un algorithme de tentative de correction du fonctionnement de l'ONU pour que celui-ci émette son signal de transmission uniquement durant un intervalle de temps qui lui est dédié ;
[Fig. 6d] illustre schématiquement un exemple d'un algorithme exécuté lorsque les tentatives de correction du fonctionnement de l'ONU ont échoué.

### EXPOSE DETAILLE DE MODES DE REALISATION

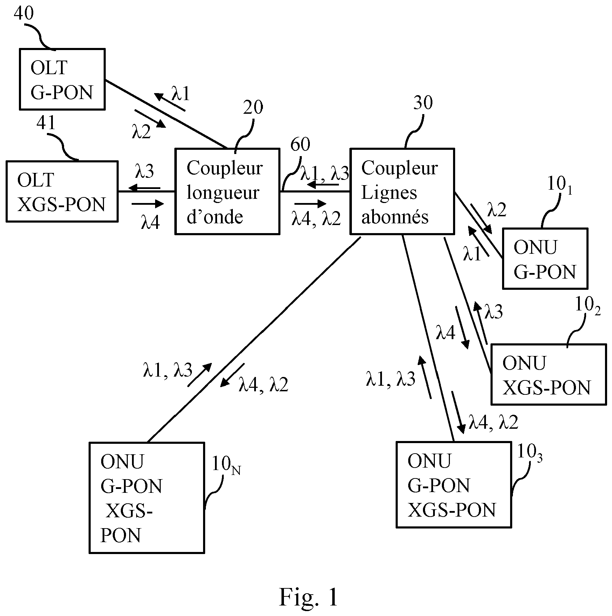

La Fig. 1 illustre schématiquement un agencement de réseau optique d'accès, de type PON, dans lequel un ou des modes de réalisations peuvent être implémentés.

Le réseau optique d'accès comporte un équipement de terminaison de ligne optique OLT 40 G-PON tel que conforme à la norme ITU-T G.984 et un équipement de terminaison de ligne optique OLT 41 XGS-PON tel que conforme à la norme ITU-T G.9807.1.

L'équipement de terminaison de ligne optique OLT 40 G-PON émet un signal optique ayant une longueur d'onde λ2, reçoit un signal optique ayant une longueur d'onde λ1.

L'équipement de terminaison de ligne optique OLT 41 XGS-PON émet un signal optique ayant une longueur d'onde λ4, reçoit un signal optique ayant une longueur d'onde λ3.

Le réseau optique d'accès comporte par exemple N unités de réseau optique ONU sur la Fig. 1. Dans un exemple d'un des modes de réalisation, un ONU peut être compris dans une passerelle internet. Dans un autre exemple d'un des modes de réalisation, un ONU est un dispositif individuel ou autonome. Ce dispositif individuel peut s'associer ou coopérer avec une passerelle internet, telle qu'une passerelle internet résidentielle, ou peut coopérer avec un autre dispositif d'un réseau afin d'y distribuer les données reçues par l'OLT.

Dans un exemple, l'unité de réseau optique ONU est comprise dans la passerelle internet 10₁ et est conforme à la norme ITU-T G.984, l'unité de réseau optique ONU comprise dans la passerelle internet 10₂ est conforme à la norme ITU-T G.9807.1, l'unité de réseau optique ONU comprise dans la passerelle internet 10₃ est conforme aux normes ITU-T G.984 et ITU-T G.9807.1 et l'unité de réseau optique ONU 10_{N} est un dispositif individuel et est conforme aux normes ITU-T G.984 et ITU-T G.9807.1.

L'unité de réseau optique ONU comprise dans la passerelle internet 10₁ émet un signal optique ayant une longueur d'onde λ1 et reçoit un signal optique ayant une longueur d'onde λ2, l'unité de réseau optique ONU comprise dans la passerelle internet 10₂ émet un signal optique ayant une longueur d'onde λ3 et reçoit un signal optique ayant une longueur d'onde λ4.

L'unité de réseau optique ONU comprise dans la passerelle internet 10₃ reçoit des signaux optiques ayant une longueur d'onde λ4 ou λ2 et émet des signaux optiques ayant une longueur d'onde λ1 ou λ3.

L'unité de réseau optique ONU comprise dans la passerelle internet 10_{N} reçoit des signaux optiques ayant une longueur d'onde λ4 ou λ2 et émet des signaux optiques ayant une longueur d'onde λ1 ou λ3.

Le réseau optique d'accès comporte un dispositif de couplage de longueurs d'ondes 20 permettant de coupler deux autres lignes optiques à la fibre optique 60. Ces autres lignes optiques permettent aux équipements de terminaison de ligne optique OLT 40 et 41 de coexister dans le réseau optique d'accès.

Il est à remarquer ici que dans certains cas d'exploitation, il peut être avantageux de combiner les équipements 40, 41 et 20 dans un équipement combiné appelé OLT combo qui prend en charge le fonctionnement global des deux protocoles G-PON et XGS-PON.

Le réseau optique d'accès comporte un dispositif de couplage de lignes abonnés 30. Les dispositifs de couplage 20 et 30 peuvent par exemple être des commutateurs de longueurs d'ondes sélectifs WSS (« Wavelength Sélective Switch » en anglais) adaptés pour multiplexer des longueurs d'ondes dans une direction et démultiplexer des longueurs d'ondes dans la direction opposée, ou être de simples coupleurs, car les OLT comme les ONU sont à même de séparer par eux même les différentes longueurs d'onde. En effet, étant équipés d'une diode laser monochromatique et disposant d'un filtre sélectif, les OLT comme les ONU peuvent recevoir uniquement les signaux portés par la longueur d'onde qui les concerne.

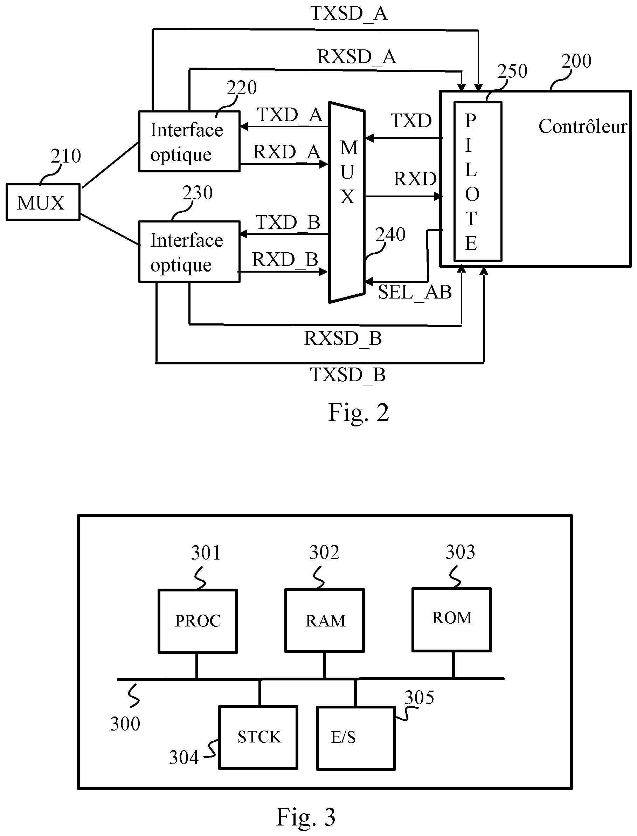

La Fig. 2 illustre schématiquement un mode de réalisation d'équipement utilisateur du réseau optique d'accès.

L'équipement utilisateur du réseau optique d'accès est par exemple l'ONU compris dans la passerelle internet 10₃ ou est l'ONU 10_{N}

L'équipement l'ONU comporte un raccord optique non représenté en Fig. 2 sur lequel est connectée la fibre optique, permettant de relier l'équipement ONU au reste du réseau optique d'accès.

L'équipement ONU comporte en outre un multiplexeur/démultiplexeur de longueurs d'ondes MUX permettant de combiner, respectivement séparer, les signaux optiques portés par la fibre optique enfichée dans le raccord optique.

De manière illustrative, sur la Fig. 2, l'équipement ONU comporte deux branches (220 et 230). Chaque branche supporte une direction de transmission (TX) et une direction de réception (RX), chacune ayant une longueur d'onde porteuse propre ou un peigne de longueurs d'ondes porteuses propres.

A noter qu'une même branche peut supporter plusieurs protocoles et donc plusieurs systèmes de transport. Lorsque plusieurs systèmes de transport utilisent les mêmes longueurs d'ondes porteuses dans le réseau optique d'accès, l'utilisation de ces longueurs d'ondes porteuses est partagée dans le temps entre les systèmes de transport selon un principe de répartition temporelle d'accès TDMA.

Ainsi, à noter aussi que la Fig. 2 représente deux branches de manière illustrative et que l'équipement ONU peut donc comporter un nombre différent de branches. L'équipement ONU comporte un contrôleur 200 qui comporte un pilote 250 qui contrôle les interfaces optique-électrique 220 et 230.

Des interfaces optique-électrique 220 et 230 comportant chacune une diode laser (pour la transmission TX de signaux optiques à destination de l'OLT) et une photodiode (pour la réception RX des signaux en provenance de l'OLT) permettent de convertir des signaux optiques en signaux électriques et vice versa.

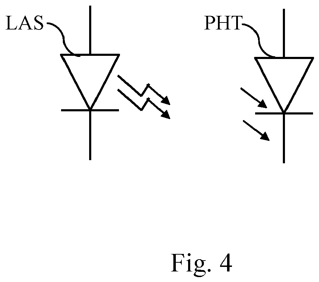

Selon un mode de réalisation, chaque interface optique-électrique 220 et 230 comporte en outre une photodiode qui permet d'indiquer si la diode laser émet un signal optique comme cela sera décrit en référence à la Fig. 4.

Par exemple, les interfaces optique-électrique 220 et 230 sont architecturées autour de composants de la société « MACOM » commercialisés sous la dénomination MO2099. Ces composants permettent l'implémentation d'un mécanisme de surveillance de la diode laser.

Par exemple, en comparant la demande de transmission d'un signal optique émanant du contrôleur et l'état de la diode laser détecté par la photodiode, il est possible de déterminer si la diode laser émet un signal optique en dehors de l'intervalle de temps alloué. Le signal TXSD_A ou TXSD_B fournit au pilote 250 l'état détecté par la photodiode et le pilote 250 ou le contrôleur 200 détermine si sa diode laser émet un signal optique en dehors de l'intervalle de temps alloué.

Si une activité de transmission est détectée alors que la demande explicite émanant du processeur n'est pas active, alors la diode laser émet un signal optique en dehors de l'intervalle de temps alloué.

Lorsque l'équipement ONU comporte une pluralité de branches, l'équipement ONU comporte en outre un commutateur de signaux électriques 240. La branche à utiliser est sélectionnée par le contrôleur 200 grâce à une ligne de sélection SEL_AB.

Ainsi, lorsque la branche A est sélectionnée par le contrôleur 200 et que des signaux optiques sont détectés en réception sur la branche A, l'interface optique-électrique 220 en informe le contrôleur 200 grâce à un signal RXSD_A. Le commutateur de signaux électriques 240 est alors configuré pour router des signaux présents sur une ligne de signaux RXD_A en provenance de l'interface optique-électrique 220 vers le contrôleur 200. De plus, lorsque des signaux optiques sont à transmettre par le biais de la branche A, le commutateur de signaux électriques 240 est configuré pour router des signaux présents sur une ligne de signaux TXD en provenance du contrôleur 200 vers une ligne de signaux TXD_A en entrée de l'interface optique-électrique 220. De manière similaire, lorsque la branche B est sélectionnée par le contrôleur 200 et que des signaux optiques sont détectés en réception sur la branche B, l'interface optique-électrique 230 en informe le contrôleur 200 grâce à un signal RXSD_B. Le commutateur de signaux électriques 240 est alors configuré pour router des signaux présents sur une ligne de signaux RXD_B en provenance de l'interface optique-électrique 230 vers la ligne de signaux RXD. De plus, lorsque des signaux optiques sont à transmettre par le biais de la branche B, le commutateur de signaux électriques 240 est configuré pour router des signaux présents sur la ligne de signaux TXD vers une ligne de signaux TXD_B en entrée de l'interface optique-électrique 230.

La Fig. 3 illustre schématiquement un exemple d'agencement matériel du contrôleur 200. L'exemple d'agencement matériel présenté comporte, reliés par un bus de communication 300 : un processeur CPU 301 ; une mémoire vive RAM (« Random Access Memory » en anglais) 302 ; une mémoire morte ROM (« Read Only Memory » en anglais) 303 ou une mémoire Flash ; une unité de stockage ou un lecteur de support de stockage, tel qu'un lecteur de cartes SD (« Secure Digital » en anglais) 304 ou un disque dur HDD (« Hard Disk Drive » en anglais) ; et au moins un ensemble d'entrées-sorties I/O 305 permettant notamment de connecter les lignes de signaux TXD et RXD.

Le processeur CPU 301 est capable d'exécuter des instructions chargées dans la mémoire RAM 302 à partir de la mémoire ROM 303, d'une mémoire externe (telle qu'une carte SD), d'un support de stockage (tel que le disque dur HDD), ou d'un réseau de communication (autre que le réseau optique d'accès 100). Lors de la mise sous tension du contrôleur 200, le processeur CPU 301 est capable de lire dans la mémoire RAM 302 des instructions et de les exécuter. Ces instructions forment un programme d'ordinateur causant la mise en oeuvre, par le processeur CPU 301, de tout ou partie des comportements, algorithmes et étapes décrits ici.

Ainsi, tout ou partie des algorithmes et étapes décrits ici peut être implémenté sous forme logicielle par exécution d'un ensemble d'instructions par une machine programmable, telle qu'un DSP (« Digital Signal Processor » en anglais) ou un microcontrôleur ou un processeur. Tout ou partie des algorithmes et étapes décrits ici peut aussi être implémenté sous forme matérielle par une machine ou un composant (« chip » en anglais), tel qu'un FPGA (« Field-Programmable Gate Array » en anglais) ou un ASIC (« Application-Specific Integrated Circuit » en anglais). Ainsi, le contrôleur 200 comporte de la circuiterie électronique adaptée et configurée pour implémenter les comportements, algorithmes et étapes décrits ici.

La Fig. 4 illustre schématiquement une partie d'une interface optique de l'équipement utilisateur du mode de réalisation de la Fig. 2.

Comme mentionné précédemment, chaque interface optique-électrique 220 et 230 comporte une photodiode PHT qui permet d'indiquer si la diode laser LAS émet un signal optique. La photodiode PHT est positionnée de telle manière qu'elle est illuminée par le signal émis par la diode laser LAS.

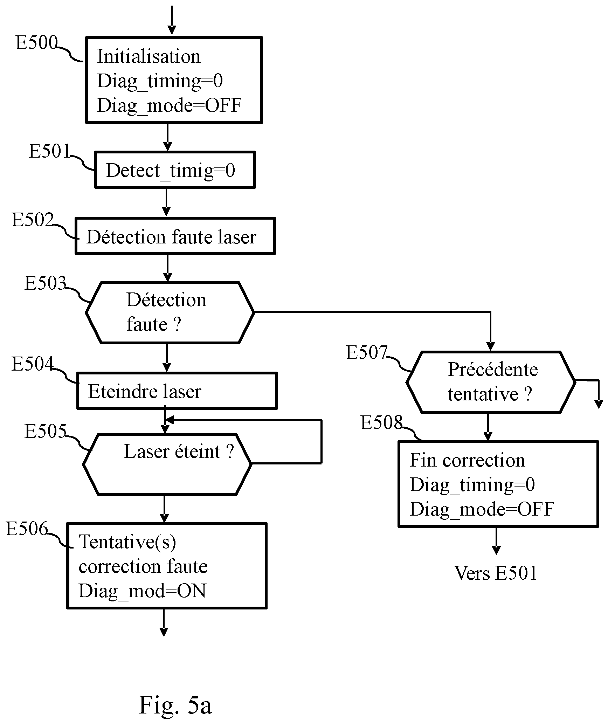

La Fig. 5a. illustre schématiquement un premier exemple d'algorithme exécuté par l'équipement utilisateur.

A l'étape E500, l'équipement utilisateur initialise la variable notée Diag_timing à la valeur nulle et la variable notée Diag_mode à la valeur « OFF ».

A l'étape E501, l'équipement utilisateur lance la procédure de vérification si chaque diode laser LAS émet un signal optique uniquement dans l'intervalle de temps prédéfini et dédié et met la variable Detect_timing à la valeur nulle.

A l'étape E502, l'équipement utilisateur compare le signal TXSD_A ou TXSD_B à la demande d'activation de la diode laser LAS émanant du contrôleur 200.

Par exemple, lorsque le signal TXSD_A ou TXSD_B est au niveau haut, la diode laser LAS émet un signal optique.

Si le signal TXSD_A ou TXSD_B est au niveau haut dans un intervalle de temps différent de l'intervalle de temps d'activation de la diode laser LAS demandé par le contrôleur 200, la diode laser émet un signal optique en dehors de l'intervalle de temps alloué et une faute est détectée.

A l'étape E503, l'équipement utilisateur vérifie si une faute est détectée.

Si une faute est détectée, l'équipement utilisateur passe à l'étape E504. Dans la négative, l'équipement utilisateur passe à l'étape E507.

A l'étape E504, l'équipement utilisateur commande la désactivation de la diode laser pour laquelle la faute a été détectée.

A l'étape E505, l'équipement utilisateur vérifie si le signal TXSD_A ou TXSD_B est au niveau bas, c'est-à-dire si la diode laser n'émet pas de signal optique.

Dans l'affirmative, l'équipement utilisateur passe à l'étape E506. Dans la négative, l'équipement utilisateur interrompt le présent algorithme.

A l'étape E506, l'équipement utilisateur commande l'exécution d'une ou de plusieurs procédures de tentative de correction de la faute et met la variable Diag_mod à la valeur « ON ».

A l'étape E507, l'équipement utilisateur vérifie si la variable Diag_mod est à la valeur « ON » et si la valeur de la variable Detect_timing est supérieure à la valeur de la variable Diag_timing. Cette vérification indique si une tentative de correction de faute a abouti.

Dans la négative, il n'a pas été nécessaire de faire une tentative de correction de faute. Dans l'affirmative, une tentative de correction de faute a réussi et l'équipement utilisateur passe à l'étape E508.

A l'étape E508, l'équipement utilisateur interrompt la procédure de tentative de correction de faute et met la variable Diag_timing à la valeur nulle et la variable notée Diag_mode à la valeur « OFF ». Dans un mode particulier, l'équipement utilisateur mémorise un identifiant de la tentative de correction de faute qui a permet de corriger la faute dans l'éventualité de l'exécuter en priorité si une nouvelle faute venait à être détectée ultérieurement. L'équipement utilisateur retourne ensuite à l'étape E501.

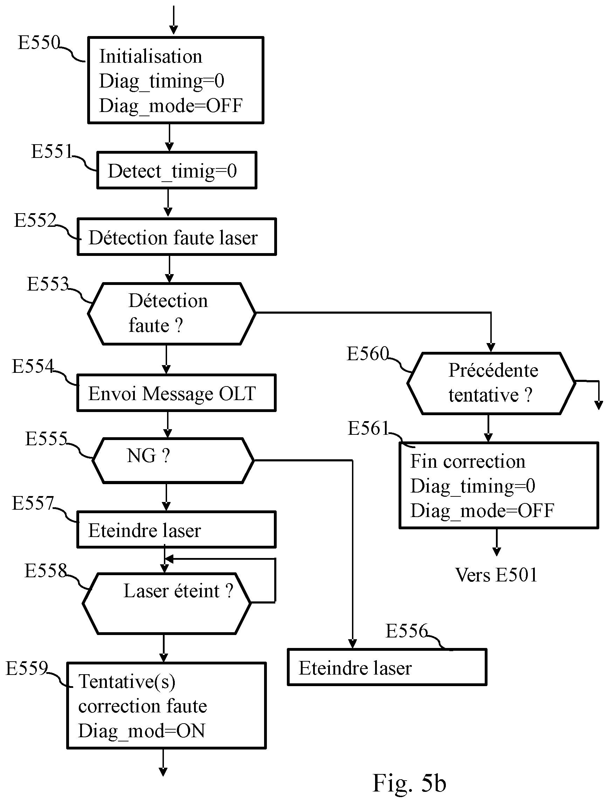

La Fig. 5b illustre schématiquement un second exemple d'algorithme exécuté par l'équipement utilisateur.

A l'étape E550, l'équipement utilisateur initialise la variable notée Diag_timing à la valeur nulle et la variable notée Diag_mode à la valeur « OFF ».

A l'étape E551, l'équipement utilisateur lance la procédure de vérification si chaque diode laser LAS émet un signal optique uniquement dans l'intervalle de temps prédéfini et dédié et met la variable Detect_timing à la valeur nulle.

A l'étape E552, l'équipement utilisateur compare le signal TXSD_A ou TXSD_B à la demande d'activation de la diode laser LAS émanant du contrôleur 200.

Par exemple, lorsque le signal TXSD_A ou TXSD_B est au niveau haut, la diode laser LAS émet un signal optique.

Si le signal TXSD_A ou TXSD_B est au niveau haut dans un intervalle de temps différent de l'intervalle de temps d'activation de la diode laser LAS demandé par le contrôleur 200, la diode laser émet un signal optique en dehors de l'intervalle de temps alloué et une faute est détectée.

A l'étape E553, l'équipement utilisateur vérifie si une faute est détectée.

Si une faute est détectée, l'équipement utilisateur passe à l'étape E554. Dans la négative, l'équipement utilisateur passe à l'étape E560.

A l'étape E554, l'équipement utilisateur commande l'envoi d'un message à destination de l'équipement de terminaison de ligne de type auquel il est relié. L'équipement utilisateur envoie par exemple un message PON spécifique à l'équipement de terminaison de ligne auquel il est relié au travers du canal de communication logique GTC (G-PON Trafic Control) afin de notifier qu'une faute laser est détectée et que l'équipement utilisateur lance l'exécution de tentatives de correction de la faute.

Le canal de communication logique GTC montant est encore actif dans la grande majorité des cas car, assez généralement, la fonction de transmission de données fonctionne correctement, mais le pilote n'arrive pas à couper la transmission de signal optique en dehors de la fenêtre temporelle. L'équipement utilisateur transmet le message PON dans la fenêtre temporelle qui lui est allouée.

Dans la minorité des cas où le défaut est plus grave, l'équipement de terminaison de ligne ne sera pas en mesure de comprendre le message spécifique transmis.

Par exemple, dans le cas du protocole G-PON basé sur la norme ITU-T G.984.3, il est possible pour l'ONU de communiquer des informations de contrôle vers l'OLT au moyen des messages PLOAM définis au chapitre 9 de la norme ITU-T G.984.3. Le message upstream Physical_Equipment_Error (PEE) (code 0x06) est un exemple de message pouvant être utilisé pour signaler à l'équipement de terminaison de ligne un défaut de fonctionnement.

Les arguments du message upstream Physical_Equipment_Error, en particulier les octets 3 à 12 comportent une valeur spécifique mettant en évidence la caractéristique de l'erreur diagnostiquée par l'équipement utilisateur et faisant l'objet d'une tentative de correction.

Le message transféré est par exemple une simple notification préventive et une mise en attente temporaire de la procédure de bannissement mise en oeuvre classiquement par l'équipement de terminaison de ligne. Par exemple, le message comporte un identifiant prédéterminé compris entre 0x0A et 0xFF et ayant comme argument un délai de traitement par l'équipement utilisateur de la tentative de correction de la faute, par exemple, sous la forme d'une durée en secondes à partir de laquelle l'équipement utilisateur va tenter à nouveau de communiquer, au risque de provoquer une nouvelle erreur.

A l'étape E555, l'équipement utilisateur vérifie si un message de rejet de la tentative de correction de la faute est reçu de l'équipement de terminaison de ligne de type auquel il est relié.

Dans l'affirmative, l'équipement utilisateur passe à l'étape E556 et commande la désactivation de la diode laser pour laquelle la faute a été détectée. Dans la négative, l'équipement utilisateur passe à l'étape E557.

A l'étape E557, l'équipement utilisateur commande la désactivation de la diode laser pour laquelle la faute a été détectée.

A l'étape E558, l'équipement utilisateur vérifie si le signal TXSD_A ou TXSD_B est au niveau bas, c'est-à-dire si la diode laser n'émet pas de signal optique.

Dans l'affirmative, l'équipement utilisateur passe à l'étape E559. Dans la négative, l'équipement utilisateur interrompt le présent algorithme.

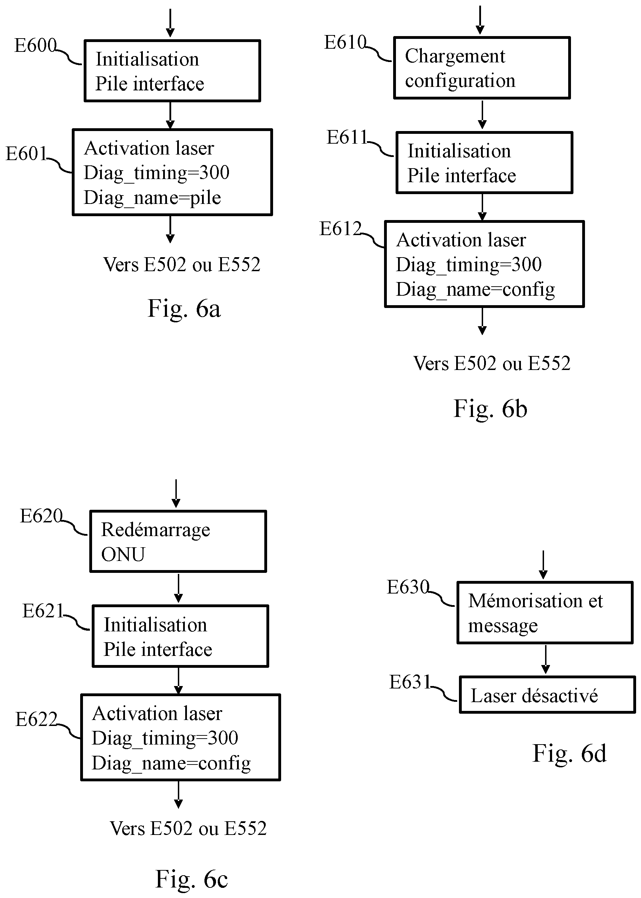

A l'étape E559, l'équipement utilisateur commande l'exécution d'une ou de plusieurs procédures de tentative de correction de la faute et met la variable Diag_mod à la valeur « ON » comme cela décrit en référence aux Figs. 6a à 6d.

Par exemple, l'ordre d'exécution des procédures de tentative de correction de la faute est l'exécution dans un premier temps de la Fig. 6a, puis en cas sera d'échec de la correction de la faute l'exécution de la Fig. 6b, puis en cas sera d'échec de la correction de la faute, l'exécution de la Fig. 6c, puis en cas sera d'échec de la correction de la faute l'exécution de la Fig. 6d.

Il est à remarquer ici que l'ordre d'exécution des procédures de tentative de correction de la faute est modifiable et/ou que seule une partie des procédures de tentative de correction de la faute telles que décrite en référence aux Figs. 6a à 6d est exécutée.

A l'étape E560, l'équipement utilisateur vérifie si la variable Diag_mod est à la valeur « ON » et si la valeur de la variable Detect_timing est supérieure à la valeur de la variable Diag_timing. Cette vérification indique si une tentative de correction de faute a abouti.

Dans la négative, il n'a pas été nécessaire de faire une tentative de correction de faute. Dans l'affirmative, une tentative de correction de faute a réussi et l'équipement utilisateur passe à l'étape E561.

A l'étape E561, l'équipement utilisateur interrompt la procédure de tentative de correction de faute et met la variable Diag_timing à la valeur nulle et la variable notée Diag_mode à la valeur « OFF ». Dans un mode particulier, l'équipement utilisateur mémorise un identifiant de la tentative de correction de faute qui a permet de corriger la faute dans l'éventualité de l'exécuter en priorité si une nouvelle faute venait à être détectée ultérieurement. L'équipement utilisateur retourne ensuite à l'étape E551.

La Fig. 6a illustre schématiquement un premier exemple d'un algorithme de tentative de correction du fonctionnement de l'ONU pour que celui-ci émette son signal de transmission uniquement durant un intervalle de temps qui lui est dédié. L'équipement utilisateur exécute le présent algorithme lorsque la variable Diag_mod à la valeur « ON » et que la variable Diag_name n'est pas à la valeur « STACK » ou « BACKUP » ou « REBOOT ».

A l'étape E600, l'équipement utilisateur commande une réinitialisation du composant de pilotage de la couche protocolaire PON (par exemple G-PON et/ou XGS-PON et/ou XG-PON etc) utilisé par le pilote 250. Ce composant de pilotage de la couche protocolaire PON peut être un composant logiciel, ou un composant matériel (« hardware » en anglais), ou un mixte d'éléments logiciels et matériels, couplé avec l'interface PON.

A l'étape E601, l'équipement utilisateur autorise une activation de la diode laser dans l'intervalle de temps dédié à l'équipement utilisateur, met la variable Diag_timing à la valeur 300, met la valeur de la variable Diag_name à la valeur « STACK ». La valeur 300 est décrémentée à chaque seconde et lorsque la valeur de la variable Diag_timing est nulle, l'équipement utilisateur retourne à l'étape E502 ou E552.

La Fig. 6b illustre schématiquement un second exemple d'un algorithme de tentative de correction du fonctionnement de l'ONU pour que celui-ci émette son signal de transmission uniquement durant un intervalle de temps qui lui est dédié. L'équipement utilisateur exécute le présent algorithme lorsque la variable Diag_mod est à la valeur « ON » et que la variable Diag_name est à la valeur « STACK ».

A l'étape E610, l'équipement utilisateur commande le chargement du logiciel utilisé par le pilote 250 à partir de la mémoire non volatile.

A l'étape E611, l'équipement utilisateur commande une réinitialisation du composant de pilotage de la couche protocolaire PON utilisée par le pilote 250.

A l'étape E612, l'équipement utilisateur autorise une activation de la diode laser dans l'intervalle de temps dédié à l'équipement utilisateur, met la variable Diag_timing à la valeur 300 et met la valeur de la variable Diag_name à la valeur « CONFIG ». La valeur 300 est décrémentée à chaque seconde et, lorsque la valeur de la variable Diag_timing est nulle, l'équipement utilisateur retourne à l'étape E502 ou E552.

La Fig. 6c illustre schématiquement un troisième exemple d'un algorithme de tentative de correction du fonctionnement de l'ONU pour que celui-ci émette son signal de transmission uniquement durant un intervalle de temps qui lui est dédié. L'équipement utilisateur exécute le présent algorithme lorsque la variable Diag_mod est à la valeur « ON » et que la variable Diag_name est à la valeur « CONFIG ».

A l'étape E620, l'équipement utilisateur commande un redémarrage de celui-ci.

A l'étape E621, l'équipement utilisateur commande une -initialisation du composant de pilotage de la couche protocolaire PON utilisée par le pilote 250.

A l'étape E622, l'équipement utilisateur autorise une activation de la diode laser dans l'intervalle de temps dédié à l'équipement utilisateur, met la variable Diag_timing à la valeur 300 et met la valeur de la variable Diag_name à la valeur « REBOOT ». La valeur 300 est décrémentée à chaque seconde et, lorsque la valeur de la variable Diag_timing est nulle, l'équipement utilisateur retourne à l'étape E502 ou E552.

La Fig. 6d illustre schématiquement un exemple d'un algorithme exécuté lorsque les tentatives de correction du fonctionnement de l'ONU ont échoué.

L'équipement utilisateur exécute le présent algorithme lorsque la variable Diag_mod est à la valeur « ON » et que la variable Diag_name est à la valeur « REBOOT ».

A l'étape E630, l'équipement utilisateur considère que les tentatives de correction de la faute ont échoué, mémorise une information indiquant que chaque tentative a échoué et génère une information représentative du défaut de fonctionnement de la liaison optique par l'intermédiaire d'une interface homme machine de la passerelle internet.

## Revendications

1. Procédé de gestion d'un défaut de fonctionnement d'une diode laser d'une interface optique d'un équipement utilisateur de type ONU, l'équipement utilisateur étant relié par un réseau optique d'accès de type réseau optique passif PON à un équipement de terminaison de ligne de type OLT, l'équipement utilisateur étant autorisé à émettre un signal optique pendant un intervalle de temps alloué à l'équipement utilisateur selon un principe d'accès multiple par répartition temporelle, **caractérisé en ce que** le procédé comporte les étapes suivantes, exécutées par l'équipement utilisateur, de :
- vérification (E552) si la diode laser émet un signal optique en dehors de l'intervalle de temps alloué et, dans l'affirmative,
- détection (E553) d'une faute,
- commande (E557) de la désactivation de la diode laser,
- exécution (E559) d'une ou de plusieurs procédures de tentative de correction de la faute.

2. Procédé selon la revendication 1, **caractérisé en ce que** la vérification que la diode laser émet un signal optique en dehors de l'intervalle de temps alloué est effectuée en comparant un signal délivré par une photodiode comprise dans l'interface optique et une commande d'activation de la diode laser émettant des signaux optiques à destination de l'équipement de terminaison de ligne, la photodiode étant positionnée de telle manière qu'elle soit illuminée par le signal émis par diode laser émettant des signaux optiques à destination de l'équipement de terminaison de ligne.

3. Procédé selon la revendication 1 ou 2, **caractérisé en ce qu'**une première procédure de tentative de correction de la faute consiste en une réinitialisation d'une mémoire volatile utilisée d'un composant de pilotage de la couche protocolaire PON par un pilote de l'interface optique, une seconde procédure de tentative de correction de la faute consiste en une commande de chargement du logiciel utilisé par le pilote à partir de la mémoire non volatile, et une troisième procédure de tentative de correction de la faute consiste en un redémarrage de l'équipement utilisateur.

4. Procédé selon la revendication 3, **caractérisé en ce que** la seconde procédure de tentative de correction de la faute est exécutée si la première procédure de tentative de correction de la faute a échoué et la troisième procédure de tentative de correction de la faute est exécutée si la seconde procédure de tentative de correction de la faute a échoué.

5. Procédé selon l'une quelconque des revendications 1 à 4, **caractérisé en ce que** le procédé comporte en outre une étape de transfert d'un message à l'équipement de terminaison de ligne si la faute est détectée.

6. Procédé selon la revendication 5, **caractérisé en ce que** l'exécution d'une ou de plusieurs procédures de tentative de correction de la faute est conditionnée à la réception d'un message émis par l'équipement de terminaison de ligne.

7. Procédé selon la revendication 5 ou 6, **caractérisé en ce que** le message est transmis au travers du canal de communication logique de contrôle de trafic.

8. Procédé selon la revendication 7, **caractérisé en ce que** le message est une notification de demande de mise en attente d'une procédure de bannissement de l'équipement utilisateur par l'équipement de terminaison de ligne.

9. Produit programme d'ordinateur comportant des instructions pour implémenter, par un processeur, le procédé selon l'une quelconque des revendications 1 à 8, lorsque ledit programme est exécuté par ledit processeur.

10. Support de stockage d'informations stockant un programme d'ordinateur comprenant des instructions pour implémenter, par un processeur, le procédé selon l'une quelconque des revendications 1 à 8, lorsque ledit programme est lu et exécuté par ledit processeur.

11. Dispositif de gestion d'un défaut de fonctionnement d'une diode laser d'une interface optique d'un équipement utilisateur de type ONU, l' équipement utilisateur étant relié par un réseau optique d'accès de type réseau optique passif PON à un équipement de terminaison de ligne de type OLT, l'équipement utilisateur étant autorisé à émettre un signal optique pendant un intervalle de temps alloué à l'équipement utilisateur selon un principe d'accès multiple par répartition temporelle, **caractérisé en ce que** le dispositif est compris dans l'équipement utilisateur et comporte :
- des moyens de vérification si la diode laser émet un signal optique en dehors de l'intervalle de temps alloué et, dans l'affirmative,
- des moyens de détection d'une faute,
- des moyens de commande de la désactivation de la diode laser,
- des moyens d'exécution d'une ou de plusieurs procédures de tentative de correction de la faute.
